# FASCICULE DE BREVET EUROPEEN

(11) **EP 2 483 007 B1**
(45) Date de publication et mention de la délivrance du brevet: **10.07.2013**
(21) Numéro de dépôt: 10757615.9
(22) Date de dépôt: 28.09.2010
(51) Int. Cl.: B21D 3/16, B23P 6/00, F01D 5/00

(54) **REPARATION D'AUBES DE COMPRESSEUR EN TITANE PAR COMPRESSION A FROID**
REPARATUR VON VERDICHTERSCHAUFELN DURCH KALTPRESSUNG
REPAIRING COMPRESSOR BLADES BY COLD COMPACTING

(30) Priorité: 29.09.2009 FR 0956730
(43) Date de publication de la demande: 08.08.2012
(73) Titulaire: Snecma, 75015 Paris (FR)
(72) Inventeur: BERTOLI, Vincenzo, I-42100 Reggio Emilia (IT); DE SANCTIS, Serge, F-93100 Montreuil (FR); GIUSTI, Stéphane, René, Julien, F-77220 La Chapelle Gauthier (FR); MONS, Claude Marcel, F-77176 Savigny Le Temple (FR)
(74) Mandataire: Gevers France
(86) Numéro de dépôt international: PCT/EP2010/064383
(87) Numéro de publication internationale: WO 2011/039197

(56) Documents cités:
- EP-A- 0 638 387
- EP-A- 1 138 431
- EP-A- 1 302 627
- EP-A- 1 944 387
- JP-A- 59 030 426
- US-A- 4 095 451

## Description

Le domaine de la présente invention est celui des moteurs aéronautiques et plus particulièrement un procédé de réparation des aubes de compresseur de ces moteurs, selon le préambule de la revendication 1.

Les moteurs aéronautiques sont constitués classiquement d'un ensemble constitué par un ou plusieurs compresseurs qui compriment de l'air aspiré dans une entrée d'air, une chambre de combustion où du carburant mélangé à l'air est brûlé, une ou plusieurs turbines qui prélèvent une partie de la puissance générée par la combustion pour entraîner le ou les compresseurs et une tuyère de sortie par laquelle sont éjectés les gaz produits. Les compresseurs sont réalisés sous la forme d'une série d'étages comprenant chacun une roue mobile, ou rotor, et une roue fixe, ou stator, munies toutes d'eux d'aubages, dits respectivement mobiles ou fixes. Les aubes mobiles sont tenues par leur partie interne, ou pied, par l'arbre de rotation du moteur, leur partie externe, ou tête, étant placée en face d'un carter de compresseur qui enveloppe l'ensemble de la veine d'air et assure le confinement de l'air comprimé.

Les aubes de compresseur des moteurs d'avion ont tendance à s'user en leur sommet à cause des frottements qui peuvent survenir contre le carter extérieur. Ces frottements surviennent en fonctionnement normal à cause des facteurs de charge imposés par l'avion, qui induisent alors des déplacements relatifs du rotor du moteur par rapport au carter qui l'entoure, ou à cause de l'usure du pied d'aube qui fait remonter le pied d'aube dans son alvéole. Ils peuvent également survenir lors d'un fonctionnement anormal, dû par exemple à un éventuel phénomène connu sous le nom de pompage du compresseur, à l'ingestion d'un corps étranger, à des vibrations excessives, etc.

Il est donc nécessaire lors des révisions périodiques du moteur de vérifier la longueur des aubes et le cas échéant de régénérer la longueur initiale pour réduire le jeu entre aube et carter, qui est défavorable pour les performances aérodynamiques du compresseur.

Dans l'art antérieur les technologies de réparation mises en oeuvre, comme par exemple celle décrite dans la demande de brevet EP1302627 de la société General Electric, consistent à découper le sommet de l'aube, à effectuer un rechargement par soudage et à réusiner l'aube à sa géométrie initiale. La réparation nécessite aussi une série d'opérations industrielles comme un grenaillage pour mettre en compression les couches superficielles et ainsi mieux résister aux contraintes vibratoires et/ou un traitement thermique avec augmentation de la température de l'aubage pour relâcher les contraintes internes créées par la soudure.

Cette technologie représente évidemment un coût important, lié d'une part à la multiplicité des procédés mis en oeuvre et, d'autre part, au temps passé pour la réparation. L'immobilisation des pièces pour leur réparation implique alors la mise en place d'un stock de pièces dites de volant pour assurer l'approvisionnement continu de la chaîne de révision des moteurs. De plus le procédé de rechargement par soudure induit un abattement des caractéristiques du matériau en sommet d'aube, qui entraîne la mise au rebut de certaines aubes, du fait qu'elles ne supporteraient plus les contraintes vibratoires.

On connait également un procédé d'allongement de l'aube, selon le préambule de la revendication 1, décrit dans le brevet US 4095451, qui consiste à comprimer l'aube à réparer entre deux rouleaux, dont l'un a une forme convexe et l'autre une forme concave reproduisant le profil de l'aube. L'opération de compression s'effectue en déplaçant l'aube selon sa direction longitudinale. Cette méthode a pour inconvénient d'agir sur toute la longueur de l'aube au lieu de n'agir que sur sa seule extrémité. On diminue ainsi les caractéristiques de résistance de l'aube en réduisant l'épaisseur de sa pale. De plus elle est adaptée à un seul profil d'aube et sa mise en oeuvre sur des aubes d'étages différents nécessite le remplacement des rouleaux.

La présente invention a pour but de remédier à ces inconvénients en proposant une méthode de réparation des extrémités d'aubes de compresseur qui ne reproduise pas certains des inconvénients de l'art antérieur et, en particulier, qui soit plus simple et plus rapide à mettre en oeuvre et, en outre, qui soit économique.

A cet effet, l'invention a pour objet un procédé de réparation d'une aube de compresseur d'une turbomachine, ladite aube comportant à son extrémité radiale une langue de chat dont l'extension radiale est inférieure à une extension radiale nominale prédéfinie, ledit procédé comprenant une étape d'élongation de ladite langue de chat par une opération de compression à froid appliquée sur les parois de ladite langue, de sorte que son élongation radiale devienne supérieure à ladite extension nominale caractérisé en ce que l'opération de compression est un galetage réalisé par déplacement de l'extrémité de l'aube entre deux rouleaux à génératrices rectilignes et espacés d'une distance inférieure à l'épaisseur de ladite langue de chat, le long de la corde reliant son bord d'attaque à son bord de fuite.

Une opération de compression, comme un galetage, est particulièrement simple à mettre en oeuvre et ne modifie pas de façon fondamentale les caractéristiques métallurgiques de l'extrémité radiale de l'aube. Les avantages de cette méthode sont sa simplicité, la possibilité de travailler à la température ambiante, l'absence de traitements thermiques post opératoires (contrairement aux autres procédés de rechargement par fusion) et la limitation des contrôles non destructifs par ressuage.

De plus, l'utilisation de rouleaux cylindriques à génératrices rectilignes et le mode de déplacement le long de la corde permet de mettre en oeuvre le procédé sur tous les types d'aubes, sans avoir à adapter la forme des rouleaux à celui du profil de la pale.

De façon préférentielle l'écartement des rouleaux est inférieur à l'épaisseur locale de ladite langue d'une valeur comprise entre 0.1 et 0.5 mm.

Dans un mode de réalisation l'élongation est obtenue par une succession de passes de galetage dont la hauteur est comprise entre 0,1 et 0,5 mm.

Préférentiellement la vitesse d'avancement est supérieure ou égale à 20 m/min.

Dans un mode particulier de réalisation la pression exercée par le galetage est variable le long de la corde de l'aube. Alors que le mode préféré de galetage est de conserver une distance entre les galets constante, qui conduit à une épaisseur constante des langues de chat des aubes, il peut être avantageux de moduler la pression qui s'exerce de façon à moduler l'épaisseur de la langue de chat.

Dans un autre mode de réalisation les axes des rouleaux sont inclinés par rapport au plan perpendiculaire à la direction d'avancement, leur partie supérieure étant déplacée vers l'avant par rapport à la direction d'avancement. Préférentiellement l'angle d'inclinaison des axes des rouleaux est inférieur à 5°.

Avantageusement le procédé est appliqué sur une aube réalisée en un alliage de titane. Préférentiellement l'alliage de titane est du TA6V. On s'aperçoit qu'il est possible de réaliser une opération d'élongation d'une pièce en alliage de titane par galetage ou matriçage à froid, malgré la grande raideur de celui-ci.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif, en référence aux dessins schématiques annexés.

Sur ces dessins :
- la figure 1 est une vue générale en coupe d'un rotor de compresseur pour une turbomachine;
- les figures 2 et 3 sont des vues en coupe de l'extrémité radiale d'une aube de compresseur, avant et après l'application d'une méthode de réparation selon un mode de réalisation de l'invention.

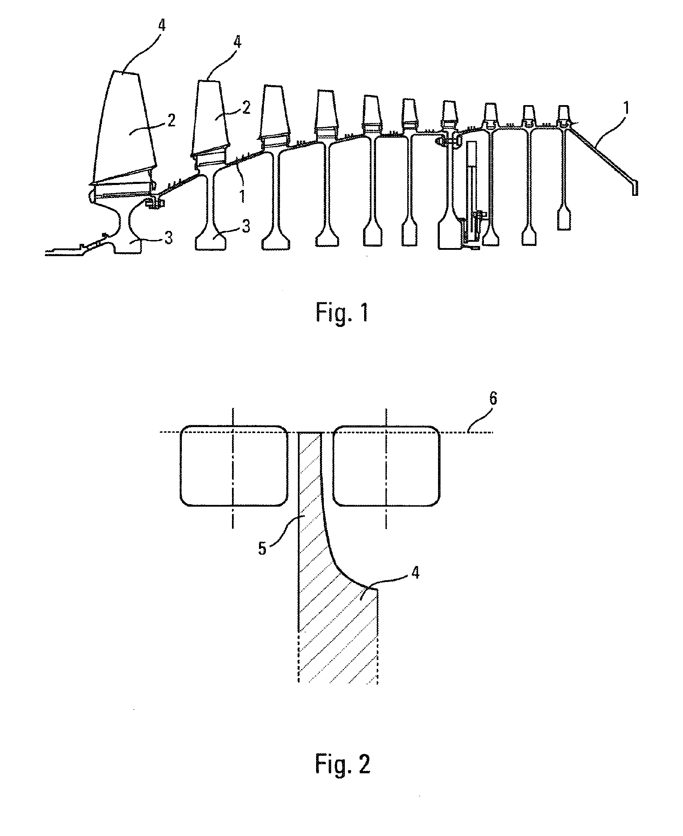

En se référant à la figure 1, on voit en coupe le rotor 1 d'un compresseur de turbomachine, comprenant des aubes 2 montées sur le rotor 1 et des disques de compresseur 3 faisant face aux aubes 2 à l'intérieur du rotor 1. Chaque aube 2 comporte un pied fixé au rotor 1 par des techniques connues de l'homme du métier et s'étend jusqu'à une extrémité, ou tête de pale 4, sur laquelle porte le procédé de réparation objet de l'invention.

En se référant à la figure 2 on voit en coupe radiale une tête d'aube dont la forme présente un sommet de pale 4 d'une épaisseur définie par les caractéristiques de tenue mécanique recherchée, qui est prolongé radialement par une partie plus mince 5, dénommée langue de chat par l'homme du métier, dont la fonction est d'assurer l'étanchéité avec le carter qui entoure le compresseur. Cette langue de chat est amincie pour pénétrer occasionnellement dans un matériau abradable collé au carter et ainsi laisser un jeu, entre le sommet 4 de la pale et le carter, qui soit le plus faible possible. Sur la figure 2 apparaît également une cote dimensionnelle 6 correspondant à la dimension nominale d'extension radiale que doit avoir l'aube en position sur le rotor pour assurer correctement le contrôle du jeu avec le carter. L'aube décrite sur la figure 2 a une extension radiale correspondant exactement à la dimension nominale du jeu.

Une tolérance est établie pour l'extension radiale de l'aube, par rapport à cette dimension nominale, en dessous de laquelle l'aube est considérée comme inapte à un fonctionnement sur moteur. Il convient alors de l'envoyer en réparation pour lui restituer une extension radiale suffisante.

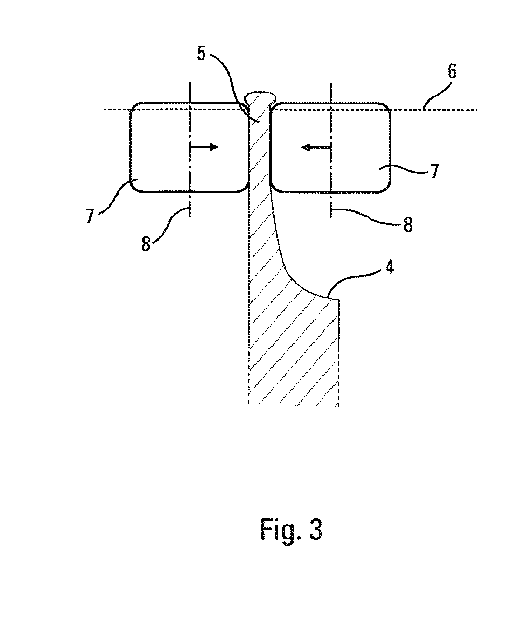

En se référant maintenant à la figure 3 on voit une aube de compresseur 2 dont le sommet de pale 4 présente également une langue de chat 5. La langue de chat 5 est, ici, représentée entre deux rouleaux 7 en métal dur, ayant une forme cylindrique à génératrices rectilignes, qui lui font subir une opération de galetage : elle est pressée entre les rouleaux qui exercent une pression importante sur les deux faces de l'extrémité radiale de la langue de chat 5 pour l'amincir et ainsi repousser du métal vers l'extérieur. L'opération de galetage s'effectue par déplacement de l'extrémité de l'aube 2 entre les rouleaux 7 qui tournent autour de leur axe 8, le long de la corde reliant son bord d'attaque à son bord de fuite. Du fait de cet amincissement créé par le galetage la langue de chat s'allonge et son extrémité radiale retraverse la ligne d'extension nominale de l'aube considérée. Celle-ci est alors à nouveau prête pour une mise en service sur moteur.

L'opération de galetage est une opération de déformation à froid, connue en soi, qui consiste, sans enlèvement de matière, à lisser et à compacter la surface des matériaux par une déformation plastique des couches périphériques du composant. Elle est généralement utilisée pour obtenir une qualité de surface élevée, en vue de l'acquisition de bonnes propriétés de frottement ou d'étanchéité avec des pièces environnantes. Du fait de la compaction de la surface, elle procure une augmentation de la dureté de la pièce, associée à une amélioration de sa résistance à l'usure, à la corrosion et à la fatigue.

Elle n'est en général pas utilisée dans un but de repousser du métal ou d'amincir une pièce.

Il est connu que le galetage est applicable sur tous les matériaux déformables. D'une façon générale on considère que la dureté du matériau ne doit pas dépasser une dureté Rockwell fixée à 45 HRC pour que l'opération de galetage soit réalisable. Par ailleurs le matériau doit présenter une aptitude suffisante à l'élongation, caractérisée par un allongement à la rupture supérieur à 5%.

Un homme du métier considère donc que ce procédé est essentiellement applicable aux alliages à base d'acier. Compte tenu des caractéristiques particulières des alliages de titane, il n'est pas enclin à envisager l'application du galetage à ce matériau.

La demanderesse est allée à l'encontre de ces préjugés et a constaté, en premier lieu, que le galetage pouvait être appliqué sur un alliage tel que le TA6V qui est majoritairement utilisé pour la fabrication des aubes de compresseur des turbomachines, bien que sa dureté avoisine les 45 à 50 HRC et que son allongement à la rupture soit d'environ 8%, ce qui est très proche de la limite basse communément admise. En second lieu elle a constaté que l'opération ne se traduisait pas seulement par un compactage de la surface mais aussi par un allongement de la langue de chat 5 des aubes.

L'utilisation de ce procédé de galetage permet ainsi de réparer des aubes de compresseurs, en allongeant leur langue de chat à froid tout en conservant leur profil, au moyen d'une opération simple et peu coûteuse.

On va maintenant décrire le déroulement d'une opération de galetage selon l'invention, appliquée sur une extrémité 4 d'aube de compresseur 2 réalisée en un alliage de titane.

Son pied étant situé vers le bas, l'aube 2 est positionnée entre les deux rouleaux 7, avec la surface médiane de sa pale qui est tangente aux rouleaux au niveau de leurs points de contact avec elle. L'écartement des rouleaux 7 est typiquement réglé à environ 0.2 mm en dessous de l'épaisseur de la langue de chat 5. Cette valeur peut varier entre 0.1 et 0.5 selon la définition de l'aubage. Cet écartement est en général constant mais, pour tenir compte du profil de l'aube et de la variation de l'épaisseur qu'elle présente le long de sa corde, la position relative des rouleaux 7 peut avantageusement être variable pour conserver un écartement inférieur de 0,2 mm à l'épaisseur locale de la langue de chat. Dans ce dernier cas la procédure est réalisée préférentiellement à l'aide d'une machine à commande numérique. Une telle procédure permet notamment de mettre en oeuvre le procédé de réparation selon l'invention sur tous les types d'aubes, quel que soit leur profil. Il suffit pour cela de programmer la forme de la corde de l'aube dans le logiciel de la machine.

Une pression prédéterminée est appliquée sur les rouleaux pour provoquer le déplacement de la matière par un désépaississement de la langue de chat 5 et le repoussement de la matière vers le haut, tandis qu'une pression est appliquée sur l'aube, selon la direction de sa corde, pour la faire avancer entre les rouleaux 7.

Dans le cas considéré d'une aube en alliage de titane TA6V, on peut réaliser un galetage, réglé à 0,2 mm comme indiqué plus haut, sur une hauteur de 0,15 mm avec une vitesse d'avancement de 22 m/min. Cette hauteur est typiquement comprise entre 0,10 et 0,50 mm pour une aube en alliage de titane. Plusieurs passes sont effectuées entre le rayon de fond de la langue de chat et le sommet de l'aube pour pousser vers le haut le bourrelet qui se crée au dessus des rouleaux et obtenir l'allongement désiré de la langue de chat 5.

Diverse variantes peuvent être envisagées pour la mise en oeuvre de ce procédé. Dans une première variante la pression appliquée sur les rouleaux n'est pas constante mais décroit au cours de l'avancement de l'aube 2 entre les rouleaux 7, pour finir en sortie avec une valeur égale à environ 50 % de sa valeur d'entrée. L'évolution de la pression suit la variation de l'épaisseur de la pale le long de son profil pour obtenir une empreinte de galetage proche d'une surface parallèle à la surface de la pale.

Dans une autre variante les axes 8 des rouleaux 7 sont inclinés par rapport au plan perpendiculaire à la direction d'avancement, leur partie supérieure étant déplacée vers l'avant par rapport à cette direction d'avancement, ce qui facilite la remontée de matière vers le haut de la pale. L'angle appliqué est préférentiellement choisi inférieur à 5° pour effectuer un galetage correct, c'est-à-dire qui ne crée pas de marche d'escalier sur la langue de chat.

L'invention a été décrite avec un mouvement de la pale entre deux rouleaux et un galetage sur une hauteur de passe déterminée. Elle pourrait tout aussi bien être réalisée sur une pale fixe, avec application, en plusieurs passes, d'un matriçage à froid sur la langue de chat 5, à l'aide d'une matrice dont la hauteur correspond sensiblement à la hauteur de passe retenue.

Bien que l'invention ait été décrite en relation avec un mode de réalisation particulier, il est bien évident qu'elle comprend tous les variantes techniques des moyens décrits si celles-ci entrent dans le cadre de l'invention telle que définie dans les revendications.

## Revendications

1. Procédé de réparation d'une aube (2) de compresseur d'une turbomachine, ladite aube comportant à son extrémité radiale (4) une langue de chat (5) dont l'extension radiale est inférieure à une extension radiale nominale prédéfinie (6), ledit procédé comprenant une étape d'élongation de ladite langue de chat par une opération de compression à froid appliquée sur les parois de ladite langue, de sorte que son élongation radiale devienne supérieure à ladite extension nominale, l'opération de compression étant un galetage réalisé par déplacement de l'extrémité de l'aube (2) entre deux rouleaux (7) à génératrices rectilignes et espacés d'une distance inférieure à l'épaisseur de ladite langue de chat, **caractérisé en ce que** ledit déplacement de l'extrémité de l'aube est réalisé le long de la corde reliant son bord d'attaque à son bord de fuite.

2. Procédé, selon la revendication 1, dans lequel l'écartement des rouleaux (7) est inférieur à l'épaisseur locale de ladite langue (5) d'une valeur comprise entre 0.1 et 0.5 mm.

3. Procédé, selon l'une des revendications 1 ou 2, dans lequel l'élongation est obtenue par une succession de passes de galetage dont la hauteur est comprise entre 0,1 et 0,5 mm.

4. Procédé, selon la revendication 3, dans lequel la vitesse d'avancement est supérieure ou égale à 20 m/min.

5. Procédé, selon l'une des revendications 1 à 4, selon lequel la pression exercée par le galetage est variable le long de la corde de l'aube (2).

6. Procédé, selon l'une des revendications 1 à 5, dans lequel les axes (8) des rouleaux (7) sont inclinés par rapport au plan perpendiculaire à la direction d'avancement, leur partie supérieure étant déplacée vers l'avant par rapport à la direction d'avancement.

7. Procédé, selon la revendication 6, dans lequel l'angle d'inclinaison des axes (8) des rouleaux (7) est inférieur à 5°.

8. Procédé, selon l'une des revendications 1 à 7, **caractérisé en ce qu'**il est appliqué sur une aube (2) réalisée en un alliage de titane.

9. Procédé, selon la revendication 8, selon lequel l'alliage de titane est du TA6V.

## Patentansprüche

1. Verfahren zur Reparatur einer Verdichterschaufel (2) einer Turbomaschine, wobei die Schaufel an ihrem radialen Ende (4) einen verjüngten Abschnitt (5) aufweist, dessen radiale Ausdehnung geringer als eine vordefinierte radiale Nennausdehnung (6) ist, wobei das Verfahren einen Schritt der Streckung des verjüngten Abschnitts durch einen Kaltkompressionsvorgang enthält, der auf die Wände des Abschnitts ausgeübt wird, so dass seine radiale Streckung größer als die Nennausdehnung wird, wobei der Kompressionsvorgang ein Rollieren ist, das durch Verschiebung des Endes der Schaufel (2) zwischen zwei Rollen (7) mit geradlinigen Mantellinien und mit einem Abstand geringer als die Dicke des verjüngten Abschnitts ausgeführt wird, **dadurch gekennzeichnet, dass** die Verschiebung des Endes der Schaufel entlang der Sehne ausgeführt wird, die ihre Vorderkante mit ihrer Hinterkante verbindet.

2. Verfahren nach Anspruch 1, wobei der Abstand der Rollen (7) um einen Wert zwischen 0,1 und 0,5 mm geringer als die lokale Dicke des Abschnitts (5) ist.

3. Verfahren nach einem der Ansprüche 1 oder 2, wobei die Streckung durch eine Folge von Rollierdurchgängen erhalten wird, deren Höhe zwischen 0,1 und 0,5 mm liegt.

4. Verfahren nach Anspruch 3, wobei die Vorschubgeschwindigkeit höher als oder gleich 20 m/min ist.

5. Verfahren nach einem der Ansprüche 1 bis 4, wobei der durch das Rollieren ausgeübte Druck entlang der Sehne der Schaufel (2) variabel is.

6. Verfahren nach einem der Ansprüche 1 bis 5, wobei die Achsen (8) der Rollen (7) bezüglich der zur Vorschubrichtung senkrechten Ebene geneigt sind, wobei ihr oberer Teil bezüglich der Vorschubrichtung nach vorne verschoben ist.

7. Verfahren nach Anspruch 6, wobei der Neigungswinkel der Achsen (8) der Rollen (7) geringer als 5° ist.

8. Verfahren nach einem der Ansprüche 1 bis 7, **dadurch gekennzeichnet, dass** es an einer Schaufel (2) angewendet wird, die aus einer Titanlegierung hergestellt ist.

9. Verfahren nach Anspruch 8, wobei die Titanlegierung TA6V ist.

## Claims

1. A method of repairing a turbomachine compressor blade (2), said blade at its radial end (4) comprising a squealer tip (5), the radial extension of which is smaller than a predefined nominal radial extension (6), said method comprising a step of lengthening said squealer tip using a cold compaction operation performed on the walls of said squealer tip, so that its radial elongation becomes greater than said nominal extension, the compaction operation being a roller burnishing operation performed by moving the end of the blade (2) between two rollers (7) with straight generatrices spaced apart by a distance less than the thickness of said squealer tip, **characterized in that** said move of the end of the blade is performed along the chord that connects its leading edge to its trailing edge.

2. The method as claimed in claim 1, in which the separation of the rollers (7) is less than the local thickness of said squealer tip (5) by a value of between 0.1 and 0.5 mm.

3. The method as claimed in either of claims 1 and 2, in which the lengthening is achieved by a succession of roller burnishing passes, the height of which is between 0.1 and 0.5 mm.

4. The method as claimed in claim 3, in which the speed of travel is greater than or equal to 20 m/min.

5. The method as claimed in one of claims 1 to 4, in which the pressure applied by the roller burnishing operation varies along the chord of the blade (2).

6. The method as claimed in one of claims 1 to 5, in which the axes (8) of the rollers (7) are inclined with respect to the plane perpendicular to the direction of travel, their upper part being offset forward with respect to the direction of travel.

7. The method as claimed in claim 6, in which the angle of inclination of the axes (8) of the rollers (7) is less than 5°.

8. The method as claimed in one of claims 1 to 7, **characterized in that** it is applied to a blade (2) made of a titanium alloy.

9. The method as claimed in claim 8, in which the titanium alloy is TA6V.
